# EUROPEAN PATENT SPECIFICATION

(11) **EP 4 410 464 B1**
(45) Date of publication and mention of the grant of the patent: **12.11.2025**
(21) Application number: 24152168.1
(22) Date of filing: 16.01.2024
(51) Int. Cl.: B23D 45/12

(54) **IMPROVED ORBITAL PIPE-CUTTING DEVICE**
VERBESSERTE ORBITALE ROHRSCHNEIDEVORRICHTUNG
DISPOSITIF ORBITAL DE COUPE DE TUYAUX AMELIORE

(30) Priority: 27.01.2023 IT 202300001296
(43) Date of publication of application: 07.08.2024
(73) Proprietor: C.B.C. S.r.l., 42016 Guastalla (RE) (IT)
(72) Inventor: VEZZANI, Giorgio, 42016 GUASTALLA (RE) (IT)
(74) Representative: Ripamonti, Enrico

(56) References cited:
- EP-A1- 4 112 256
- WO-A1-2009/137214
- DE-A1- 10 134 269
- DE-U1- 29 611 209
- US-A- 3 974 562
- US-A1- 2005 097 752
- US-A1- 2010 101 094

## Description

The present invention refers to an improved orbital pipe-cutting device.

More particularly, the present invention refers to a pipe-cutting device of the orbital type suitable in use in the case of replacing tubular profiles with a circular section, for example, damaged by the cutting that is made at upstream and downstream sections of the damaged pipe or it defines a device in use in the sector of the production of pipe segments, for example, downstream of a station for forming a continuous tubular element obtained starting from a bent and longitudinally welded metal sheet or by extrusion or the like. US 3 974 562 A discloses the preamble of claim 1.

The orbital cutting processing of tubular profiles with a circular section is a processing that is carried out by driving a toothed cutting disc that is moved in order to perform a number of revolutions around the perimeter surface of the pipe, cutting it progressively through until the separation of the pipe segment is achieved.

The orbital type devices for cutting pipes typically comprise tightening elements, tubular profile support elements and one or more cutting elements generally mounted on said support elements and operable to rotate with respect to the same for a movement, as previously described, of revolution with respect to the axis of the tubular profile to be subjected to cutting action.

In the orbital cutting devices of the manual type, the cutting elements are stabilized with respect to the operating element or handwheel that allows the operator to rotate the cutting elements with respect to the axis of the tubular profile and guarantees, in addition to less efforts for the operator, also a steady advancement of the cutting tool and, consequently, a better cutting quality.

However, the traditional orbital pipe-cutting devices have significant drawbacks related to their overall dimensions and weights that make it difficult to transport, mount them on the support structures or frames and position them when not in a condition of use.

Aim of the present invention is to overcome the drawbacks set forth above.

More particularly, aim of the present invention is to provide an improved orbital pipe-cutting device with the overall dimensions and weights contained in all conditions of use.

A further aim of the present invention is to provide an orbital pipe-cutting device for easy and effortless transport.

A further aim of the present invention is to provide an orbital pipe-cutting device that allows an easy and effortless positioning in the warehouse when in a condition of use.

A further aim of the present invention is to make available to the users an improved orbital pipe-cutting device adapted to guarantee high reliability and durability over time and moreover, such that it can be easily and economically realized.

These and other aims are achieved by the invention having the features referred to in claim 1.

According to the invention there is provided an improved orbital pipe-cutting device comprising a support and tightening block for a tubular element to be subjected to cutting processing and a cutting head rotatably arranged with respect to said support block for cutting the tubular profile with a revolution movement with respect to the axis thereof, comprising coupling means for a removable type constraint of the cutting head with respect to the support block.

Advantageous embodiments of the invention appear from the dependent claims.

The constructive and functional characteristics of the improved orbital pipe-cutting device of the present invention can be better understood from the detailed description that follows, in which reference will be made to the attached drawing tables that illustrate a preferred and non-limiting embodiment and in which:

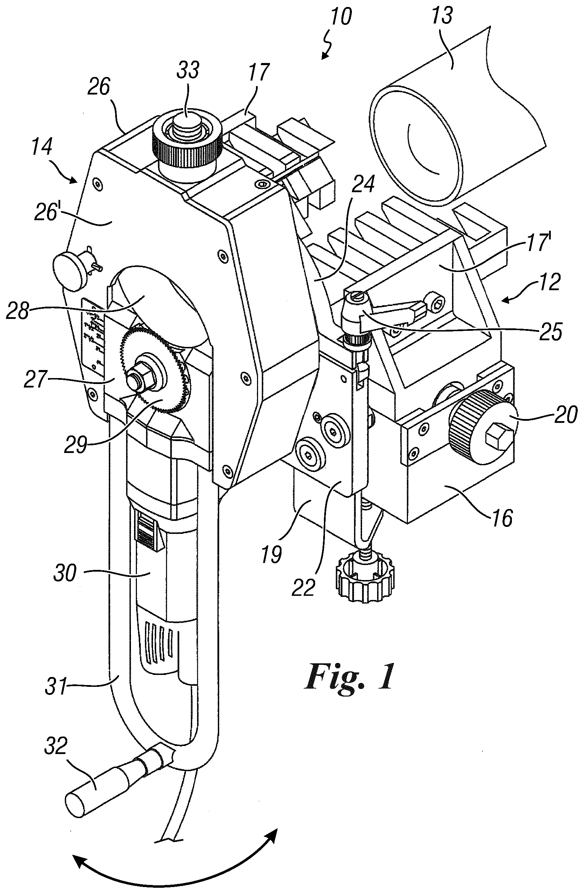

figure 1 schematically illustrates an axonometric view of the improved orbital pipe-cutting device of the present invention;
figure 2 schematically illustrates an axonometric view of the pipe-cutting device of the invention in a disassembled configuration.

With reference to the cited figures, the improved orbital pipe-cutting device of the present invention, indicated overall with 10, comprises a support block 12 for a tubular element 13 to be subjected to cutting processing and a cutting head 14 constrained in a non-rigid manner with respect to the support block 12.

The support block 12 comprises means for tightening the tubular profile 13 to be subjected to the cutting and means of stabilization with respect to a rest or work surface.

The means for tightening the tubular profile 13 comprise a vice composed of a base-vice 16 and a pair of opposed jaws defined, respectively, by a right jaw 17 and by a left jaw 17', which are slidably stabilized with respect to the base-vice 16 and movable in mutual approach/distancing by means of a screw connection 18 which can be driven by means of a pawl 20; said right 17 and left 17' jaws can be adjusted for a centring function.

The support block 12 further comprises stabilization means comprising fixing brackets 19 constrained with retaining means of known type to the base-vice 16 and which are functional in order to rigidly stabilize said base-vice 16 with respect to a work/rest surface or the like.

A plate 22 provided with a central opening 23 with a semicircular shape is stabilized with respect to a face of the base-vice 16 of the means for tightening the tubular profile 13, with said central opening 23 coaxial with the tubular profile 13 to be subjected to cutting processing; said plate 22 can be adjusted in height and/or perpendicularity with reference to the face of the base-vice 16 by means of fixing-adjusting screws 22'.

Said plate 22 comprises a link 24 with a semicircular shape corresponding to that of the central opening 23 of the plate, with a first end 24' hinged with respect to the plate 22 and with a second end 24 free and removably constrainable with respect to said plate 22 by means of a locking/unlocking clamp 25.

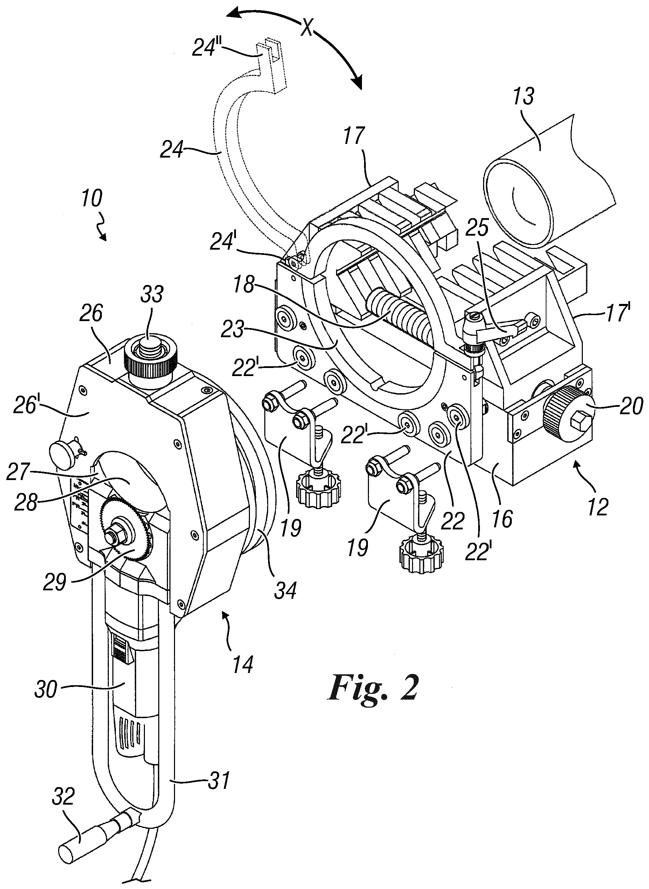

The link 24 coupled to the plate 22 and, in particular, to the central opening 23 thereof, defines an annular tightening element coaxial with the tubular profile 13 to be cut and of the openable/reclosable type (as indicated by the arrow "X" in figure 2) by means of the locking/unlocking clamp 25.

The plate 22 including the link 24 is arranged in an intermediate position between the support block 12 and the cutting head 14.

The cutting head 14 comprises a box-like body 26 closed by means of a closing plate 26', inside which a central body 27 is housed provided with a central through opening 28 (the diameter dimension of said through opening 28 can be adjusted as a function of the diameter of the pipe to be cut by means of an adjustment knob 33 positioned on the box-like body 26 and functional in order to increase or decrease the dimension of said opening) and supporting a cutting tool or cutting wheel 29 driven by means of a motor 30 fixed to said central body 27, a link 31 provided with a handle 32 is fixed with respect to the central body 27 with the function of allowing an operator to move said cutting head 14 in revolution with respect to the axis of the tubular profile 13 to be cut.

Said cutting head, moreover, comprises a sleeve or flange 34 fixed externally to the box-like body 26, centrally hollow and fixed to the box-like body and facing in the direction of the plate 22.

The sleeve or flange 34 has external diameter dimensions corresponding to those of the annular tightening element of the plate 22 and defines a coupling means of the cutting head 14 with respect to the support block 12, with said coupling being of the removable type and such as to allow a separation between the cutting head 14 and the support block 12.

More particularly, the operator by acting on the locking/unlocking clamp 25 releases the link 24 with respect to the plate 22 allowing the opening of the annular tightening element and, in this way, he can decouple the sleeve or flange 34 with respect to the plate 22 and, therefore, achieves the decoupling of the cutting head 14 from the support block 12.

Similarly, by performing the steps in reverse to those described above, the same operator can couple the sleeve or flange 34 with respect to the plate 22 and, therefore, achieve the coupling of the cutting head 14 with respect to the support block 12.

As can be seen from the foregoing, there are obvious advantages that the improved pipe-cutting device of the invention achieves.

The improved orbital pipe-cutting device, thanks to the possibility of detaching the cutting head with respect to the support block relative to which the pipe to be cut is tightened, advantageously allows to contain the overall dimensions and weights in all conditions of use.

A further advantage of the device of the invention allows easy and effortless transport by the operator.

A further advantage of the present invention is represented by the fact that it allows an easy and effortless positioning in the warehouse or packaging or the like when in a condition of use.

Although the invention has been described above with particular reference to an embodiment given merely by way of non-limiting example, numerous modifications and variations will be apparent to a person skilled in the art in the light of the above description. Therefore, the present invention intends to embrace all the modifications and variations which fall within the scope of the following claims.

## Claims

1. An improved orbital pipe-cutting device (10) comprising a support and tightening block (12) for a tubular element (13) to be subjected to cutting processing and a cutting head (14) rotatably arranged with respect to said support block for cutting the tubular profile (13) with a revolution movement with respect to the axis thereof, wherein it comprises coupling means for a removable type constraint of the cutting head (14) with respect to the support block (12) **characterized in that** it is comprising a locking/unlocking plate (22) and a sleeve or flange (34) coupled, respectively, to said support block (12) and to said cutting head (14), said plate (22) comprising an annular tightening element coaxial with the tubular profile (13) to be cut and comprising a central opening (23) with a semicircular shape of the plate (22) and a link (24) with a semicircular shape corresponding to that of the central opening (23) with a first end (24') hinged with respect to the plate (22) and with a second end (24) free and constrainable with respect to the plate (22).

2. The pipe-cutting device according to claim 1, **characterized in that** the support block (12) comprises means for tightening the tubular profile 13 to be subjected to the cutting and means of stabilization with respect to a rest or work surface.

3. The pipe-cutting device according to claim 2, **characterized in that** the means for tightening the tubular profile (13) comprise a vice composed of a base-vice (16) and of a pair of opposed jaws defined, respectively, by a right jaw (17) and by a left jaw (17'), which are slidably stabilized with respect to said base-vice (16) and movable in mutual approach/distancing by means of a screw connection (18) which can be driven by means of a pawl (20).

4. The pipe-cutting device according to claim 2, **characterized in that** the means of stabilization with respect to a rest or work surface comprise fixing brackets (19) constrained to the base-vice (16).

5. The pipe-cutting device according to claim 1, **characterized in that** the cutting head (14) comprises a box-like body (26) closed by means of a closing plate (26'), inside which a central body (27) is housed provided with a central through opening (28) and supporting a cutting tool or cutting wheel (29) driven by means of a motor (30) fixed to said central body (27).

6. The pipe-cutting device according to claim 1, **characterized in that** the plate (22) is stabilized with respect to a face of the base-vice (16) of the means for tightening the tubular profile (13) and is adjustable in height and/or perpendicularity with reference to the face of the base-vice (16) by means of fixing-adjusting screws (22').

7. The pipe-cutting device according to claim 1, **characterized in that** the link (24) is constrainable with respect to the plate (22) by means of a locking/unlocking clamp (25).

8. The pipe-cutting device according to the preceding claims, **characterized in that** the sleeve or flange (34) of the cutting head (14) is fixed externally to the box-like body (26) of said cutting head (14) in the direction of the plate (22), is centrally hollow with external diameter dimensions corresponding to those of the annular tightening element of the plate (22), said sleeve or flange (34) being coupled/decoupled with respect to the support block (12) by means of a tightening/untightening action of the link (24) of the plate (22).

9. The pipe-cutting device according to claim 5, **characterized in that** the diameter dimension of the through opening (28) is adjusted as a function of the diameter of the pipe to be cut by means of an adjustment knob (33) positioned on the box-like body (26).

## Patentansprüche

1. Verbesserte orbitale Rohrschneidevorrichtung (10), umfassend einen Halte- und Spannblock (12) für ein rohrförmiges Element (13), das einer Schneidbearbeitung unterzogen werden soll, und einen Schneidkopf (14), der drehbar in Bezug auf den Halteblock angeordnet ist, um das rohrförmige Profil (13) mit einer Drehbewegung in Bezug auf seine Achse zu schneiden, wobei sie Kupplungseinrichtungen für eine abnehmbare Fixierung des Schneidkopfs (14) in Bezug auf den Halteblock (12) umfasst,
**dadurch gekennzeichnet, dass** sie eine Verriegelungs-/Entriegelungsplatte (22) und eine Hülse oder einen Flansch (34) umfasst, der/die jeweils mit dem Halteblock (12) und dem Schneidkopf (14) gekoppelt sind, die Platte (22) umfassend ein ringförmiges Spannelement, das koaxial zu dem zu schneidenden rohrförmigen Profil (13) ist und umfassend eine mittlere Öffnung (23) mit einer halbkreisförmigen Form der Platte (22) und ein Verbindungsstück (24) mit einer halbkreisförmigen Form, die jener der mittleren Öffnung (23) entspricht, wobei ein erstes Ende (24') in Bezug auf die Platte (22) angelenkt ist, und ein zweites Ende (24) frei und in Bezug auf die Platte (22) fixierbar ist.

2. Rohrschneidevorrichtung nach Anspruch 1, **dadurch gekennzeichnet, dass** der Halteblock (12) Einrichtungen zum Spannen des rohrförmigen Profils 13, das dem Schneiden unterzogen werden soll, und Einrichtungen zum Stabilisieren in Bezug auf eine Auflage- oder Arbeitsfläche umfasst.

3. Rohrschneidevorrichtung nach Anspruch 2, **dadurch gekennzeichnet, dass** die Einrichtungen zum Spannen des rohrförmigen Profils (13) einen Schraubstock umfassen, der aus einem Basisschraubstock (16) und einem Paar gegenüberliegender Backen besteht, die jeweils durch eine rechte Backe (17) und eine linke Backe (17') definiert sind, die in Bezug auf den Basisschraubstock (16) gleitend stabilisiert und mittels einer Schraubverbindung (18), die mittels einer Klinke (20) angetrieben werden kann, in gegenseitiger Annäherung/Beabstandung bewegbar sind.

4. Rohrschneidevorrichtung nach Anspruch 2, **dadurch gekennzeichnet, dass** die Einrichtungen zum Stabilisieren in Bezug auf eine Auflage- oder Arbeitsfläche Befestigungshalterungen (19) umfassen, die an dem Basisschraubstock (16) fixiert sind.

5. Rohrschneidevorrichtung nach Anspruch 1, **dadurch gekennzeichnet, dass** der Schneidkopf (14) einen kastenartigen Körper (26) umfasst, der mittels einer Verschlussplatte (26') verschlossen ist, in dem ein mittlerer Körper (27) untergebracht ist, der mit einer mittleren Durchgangsöffnung (28) versehen ist und ein Schneidwerkzeug oder Schneidrad (29) trägt, das mittels eines Motors (30) angetrieben wird, der an dem mittleren Körper (27) befestigt ist.

6. Rohrschneidevorrichtung nach Anspruch 1, **dadurch gekennzeichnet, dass** die Platte (22) in Bezug auf eine Fläche des Basisschraubstocks (16) der Einrichtungen zum Spannen des rohrförmigen Profils (13) stabilisiert ist und mittels Befestigungs-/Einstellschrauben (22') in Höhe und/oder Rechtwinkligkeit in Bezug auf die Fläche des Basisschraubstocks (16) einstellbar ist.

7. Rohrschneidevorrichtung nach Anspruch 1, **dadurch gekennzeichnet, dass** das Verbindungsstück (24) mittels einer Ver-/Entriegelungsklammer (25) in Bezug auf die Platte (22) fixierbar ist.

8. Rohrschneidevorrichtung nach einem der vorherigen Ansprüche, **dadurch gekennzeichnet, dass** die Hülse oder der Flansch (34) des Schneidkopfs (14) außen an dem kastenartigen Körper (26) des Schneidkopfs (14) in Richtung der Platte (22) befestigt ist, mittig hohl mit Außendurchmesserabmessungen ist, die jenen des ringförmigen Spannelements der Platte (22) entsprechen, wobei die Hülse oder der Flansch (34) in Bezug auf den Halteblock (12) mittels einer Spann-/Lösewirkung des Verbindungsstücks (24) der Platte (22) gekoppelt/entkoppelt wird.

9. Rohrschneidevorrichtung nach Anspruch 5, **dadurch gekennzeichnet, dass** die Durchmesserabmessung der Durchgangsöffnung (28) abhängig von dem Durchmesser des zu schneidenden Rohrs mittels eines Einstellknopfs (33) eingestellt wird, der an dem kastenartigen Körper (26) positioniert ist.

## Revendications

1. Dispositif amélioré de coupe orbitale de tuyaux (10) comprenant un bloc de support et de serrage (12) pour un élément tubulaire (13) destiné à être soumis à un processus de coupe et une tête de coupe (14) disposée de manière rotative par rapport audit bloc de support pour couper le profil tubulaire (13) grâce à un mouvement de rotation par rapport à son axe, dans lequel il comprend des moyens de couplage pour fixer de façon amovible la tête de coupe (14) par rapport au bloc de support (12), **caractérisé en ce qu'**il comprend une plaque de verrouillage/déverrouillage (22) et un manchon ou une bride (34) couplés, respectivement, audit bloc de support (12) et à ladite tête de coupe (14), ladite plaque (22) comprenant un élément de serrage annulaire coaxial au profil tubulaire (13) à couper et comprenant une ouverture centrale (23) de forme semi-circulaire de la plaque (22) et une liaison (24) de forme semi-circulaire correspondant à celle de l'ouverture centrale (23) avec une première extrémité (24') articulée par rapport à la plaque (22) et avec une deuxième extrémité (24) libre et pouvant être fixée par rapport à la plaque (22) .

2. Dispositif de coupe de tuyaux selon la revendication 1, **caractérisé en ce que** le bloc de support (12) comprend des moyens de serrage du profilé tubulaire 13 à soumettre à la coupe et des moyens de stabilisation par rapport à un support ou une surface de travail.

3. Dispositif de coupe de tuyaux selon la revendication 2, **caractérisé en ce que** les moyens de serrage du profilé tubulaire (13) comprennent un étau composé d'un étau de base (16) et d'une paire de mâchoires opposées définies, respectivement, par une mâchoire droite (17) et par une mâchoire gauche (17'), stabilisées de manière coulissante par rapport audit étau de base (16) et mobiles en rapprochement/éloignement mutuel au moyen d'une liaison à vis (18) qui peut être entraînée au moyen d'un cliquet (20).

4. Dispositif de coupe de tuyaux selon la revendication 2, **caractérisé en ce que** les moyens de stabilisation par rapport à un plan de repos ou de travail, comprennent des équerres de fixation (19) fixées à l'étau de base (16).

5. Dispositif de coupe de tuyaux selon la revendication 1, **caractérisé en ce que** la tête de coupe (14) comprend un corps en forme de boîte (26) fermé au moyen d'une plaque de fermeture (26'), à l'intérieur duquel est logé un corps central (27) muni d'une ouverture centrale débouchante (28) et prenant en charge un outil de coupe ou une molette de coupe (29) entraîné au moyen d'un moteur (30) fixé audit corps central (27).

6. Dispositif de coupe de tuyaux selon la revendication 1, **caractérisé en ce que** la plaque (22) est stabilisée par rapport à une face de l'étau de base (16) du moyen de serrage du profilé tubulaire (13) et est réglable en hauteur et/ou en de façon perpendiculaire relativement à la face de l'étau de base (16) au moyen de vis de fixation-réglage (22').

7. Dispositif de coupe de tuyaux selon la revendication 1, **caractérisé en ce que** la liaison (24) peut être fixée par rapport à la plaque (22) au moyen d'une pince de verrouillage/déverrouillage (25).

8. Dispositif de coupe de tuyaux selon les revendications précédentes, **caractérisé en ce que** le manchon ou la bride (34) de la tête de coupe (14) est fixé à l'extérieur du corps en forme de boîte (26) de ladite tête de coupe (14) dans la direction de la plaque (22), est creux au centre avec des dimensions de diamètre extérieur correspondant à celles de l'élément de serrage annulaire de la plaque (22), ledit manchon ou bride (34) étant couplé/découplé par rapport au bloc de support (12) au moyen d'une action de serrage/desserrage de la liaison (24) de la plaque (22).

9. Dispositif de coupe de tuyaux selon la revendication 5, **caractérisé en ce que** la dimension du diamètre de l'ouverture débouchante (28) est ajustée en fonction du diamètre du tuyau à couper au moyen d'un bouton de réglage (33) positionné sur le corps en forme de boîte (26).
